# EUROPÄISCHE PATENTSCHRIFT

(11) **EP 1 894 968 B1**
(45) Veröffentlichungstag und Bekanntmachung des Hinweises auf die Patenterteilung: **02.05.2018**
(21) Anmeldenummer: 07112309.5
(22) Anmeldetag: 12.07.2007
(51) Int. Cl.: C08F 236/10

(54) **Kautschukmischung für Fahrzeugreifen-Laufstreifen**
Rubber mixture for treads of vehicle tyres
Composition de caoutchouc pour bandes de roulement de pneus

(30) Priorität: 29.08.2006 DE 102006040412
(43) Veröffentlichungstag der Anmeldung: 05.03.2008
(73) Patentinhaber: Continental Reifen Deutschland GmbH, 30165 Hannover (DE)
(72) Erfinder: Laschet, Marc, Dr., 30161 Hannover (DE); Recker, Carla, Dr., 30167 Hannover (DE); Schulze, Herbert, Dr., 30179 Hannover (DE); Dettmer, Fabian, Dr., 38106 Braunschweig (DE); Weinreich, Hajo, Dr., 31840 Hessisch Oldendorf (DE); Wagemann, Jürgen, Dr., 31162 Salzdetfurth (DE); Herzog, Katharina, Dr., 31177 Harsum (DE); Albers, Isabel, Dr., Abingdon, OX143QB (GB)
(74) Vertreter: Finger, Karsten

(56) Entgegenhaltungen:
- US-B1- 7 064 171

## Beschreibung

Die Erfindung betrifft eine vulkanisierbare Kautschukmischung mit einem Kautschukanteil, der mindestens ein Styrol-Butadien-Copolymer (SBR-Kautschuk) und daneben gegebenenfalls andere Natur- oder Synthesekautschuke enthält, mit einem oder mehreren Füllstoffen sowie gegebenenfalls mit Additiven. Weiterhin betrifft die Erfindung die Verwendung dieser Kautschukmischung für die Herstellung von Laufstreifen für Fahrzeugreifen, aus der Mischung nach üblicher Vulkanisation hergestellte Fahrzeugreifen-Laufstreifen und schließlich Fahrzeugreifen, insbesondere Fahrzeugluftreifen, die diese Laufstreifen enthalten.

Es ist bereits seit langem möglich, die Gebrauchseigenschaften von Vulkanisaten oder "Gummis", die für Fahrzeugreifen verwendet werden, durch Additive und/oder Funktionalisierung der vulkanisierbaren Kautschuke auf verschiedene Weise zu beeinflussen. Häufig besteht jedoch der Konflikt, dass bei Optimierung einer gewünschten Eigenschaft eine andere, ebenfalls gewünschte Eigenschaft verschlechtert wird.

Reifenkautschukmassen für Laufstreifen sind gerade im PKW-Bereich häufig SBR-basiert. Ein SBR-Kautschuk, wie er hier verstanden wird, ist ein Copolymerkautschuk aus konjugiertem Dien und Styrol, wobei das praktisch bedeutsamste Element der Gruppe der Styrol-Butadien-Kautschuk (=SBR) selbst ist.

Neben den statistischen SBR-Copolymeren sind seit langer Zeit Block-Copolymere bekannt, wobei die Blockbildung Einfluss auf die Gebrauchseigenschaften - wie auch auf andere Funktionen - nimmt. Die Herstellung von SBR Blockpolymeren wird beispielhaft in der US 3294768 beschrieben.

Die DE 69312891 T2 offenbart die Verbesserung des Gleichgewichts zwischen Abriebfestigkeit, Nassschleuderverhalten und Trockenschleuderverhalten und anderer Eigenschaften mit Hilfe einer SBR-basierten Reifenmischung, die mit 20 bis 50 % VinylGehalt weniger als 11 % Styrol-Mikroblöcke von 4 bis 10 kontinuierlich zusammenhängenden Styrol-Einheiten und weniger als 10 % Mikroblöcke von 11 oder mehr zusammenhängenden Styrol-Einheiten besitzen soll.

US7064171 offenbart eine vulkanisierbare Kautschukmischung aus 20 bis 70 phr Polybutadien und 30 bis 80 phr SBR, dadurch gekennzeichnet, dass das SBR einen Styrolgehalt von 10 bis 40% und einen Vinylgehalt von 8 bis 20% aufweist.

Aufgabe der Erfindung ist es, eine Kautschukmischung bereitzustellen, die für Fahrzeugreifen-Laufstreifen verwendet werden kann, die die gleichzeitige Optimierung unterschiedlicher Reifeneigenschaften ermöglicht und die anhand ihrer Zusammensetzung und/oder Mikrostruktur ein Tuning gegenläufiger Eigenschaftspaare in die gewünschte Richtung erlaubt, insbesondere um sonst nicht gleichzeitig optimierbare Eigenschaftspaare wie Eisbremsen und Nassgriff oder Nassbremsen und Rollwiderstand besser vereinbaren zu können.
Gelöst wird diese Aufgabe durch eine vulkanisierbare Kautschukmischung der eingangs genannten Art, mit mindestens einem Kautschuk-Polymer, einem oder mehreren Füllstoffen sowie gegebenenfalls Additiven, bei welcher der Kautschukanteil 1 bis 100 Gew.-% eines konjugierten Diolefin-Styrol-Copolymers (SBR) mit einem Styrolgehalt von 10 bis 60 Mol-% enthält, wobei der aus den Daten der dynamisch mechanischen Analyse (DMA) des SBR-Reinpolymerisates ermittelte Maximalwert für tan δ das zu steigenden Temperaturen erste Maximum des Verlustmoduls um mindestens 30°C überschreitet. Diese Bedingung wird erfindungsgemäß dadurch erfüllt, dass die Monomer-Konzentrationen von Diolefin bzw. Butadien und Styrol während der Reaktion so variiert werden, dass sich die angestrebte Bedingung ergibt.
Überraschenderweise hat sich herausgestellt, dass die Verteilung der Styroleinheiten und der konjugierten Dien-Einheiten entlang der Kette eine entscheidende Wirkung auf die Gebrauchseigenschaften des vulkanisierten Reifenkautschuks hat Die Gebrauchseigenschaften können also durch Variation der Monomerkonzentrationen im Herstellungsverfahren eingestellt und fein reguliert.
Durch die Variation der Monomer-Konzentration wird eine Feineinstellung verschiedener Gebrauchseigenschaften nebeneinander ermöglicht, die sonst häufig nicht gleichzeitig optimierbar sind. Dies zeigt sich bereits an den dem Fachmann bekannten Prädikatoren für diese Gebrauchseigenschaften, wie nachfolgend anhand der Beispiele noch näher beschrieben ist.

Ein vorteilhaftes Verfahren für die Herstellung des erfindungsgemäßen SBRs ist das Copolymerisieren eines konjugierten Diolefins, vorzugsweise Butadien, und Styrols in einem eine Lewis-Base enthaltenden Kohlenwasserstofflösungsmittel unter Einsatz mindestens einer Verbindung, die ausgewählt ist aus der Gruppe bestehend aus einer organischen Alkalimetallverbindung, einer anorganischer Erdalkalimetallverbindung und einer Lithiumamidverbindung als Starter, wie im Stand der Technik bekannt. Aufgrund einer experimentell ermittelten Steuerung der Monomer-Konzentration können die Eigenschaften des resultierenden Copolymers in der gewünschten Weise eingestellt werden, z. B. um die Bedingung zu erfüllen, dass der aus den Daten der dynamisch mechanischen Analyse (DMA) des Reinpolymerisates ermittelte Maximalwert für tan δ das zu steigenden Temperaturwerten erste Maximum des Verlustmoduls um mindestens 30°C überschreitet.

Erfindungsgemäß ist die Verteilung der Monomere entlang der Kette des unvulkanisierten SBR-Kautschuk-Polymers ungleichmäßig. Dies kann insbesondere bedeuten, dass die Verteilung entlang der Kette einen Gradienten zeigt, d. h. dass sich der Mittelwert der Anzahl der Styroleinheiten (oder der Dien-Einheiten, je nach Betrachtungsweise) über eine bestimmte Teillänge der Kette mathematisch monoton längs der Kette des unvulkanisierten Copolymers verändert.

Gemäß einem anderen Aspekt der Erfindung ist das Styrol mindestens teilweise in Mikroblöcken, d. h. in Einheiten von 2 bis 10 zusammenhängenden Styrolmoleküleinheiten angeordnet. In einer bevorzugten Ausführungsform sind die Styrol-Mikroblöcke aus 3 bis 6 Styrolmoleküleinheiten - in kontinuierlicher Folge - zusammengesetzt. Dies sind natürlich statistische Werte, so dass es gelegentlich vorkommen kann, dass zuweilen mehr als 10 Einheiten in einer Reihe aufeinander folgen.

Vorzugsweise sind 20 bis 50 % der Styrol-Einheiten des SBR-Kautschuks in Styrol-Mikroblöcken vorhanden. Die Einführung der Mikroblöcke kann nach an sich bekannten Verfahren erreicht werden. Ein geeignetes Verfahren ist es, dem Starter eine Kaliumverbindung beizufügen, z. B. wie es in der US 3,294,768 beschrieben ist. Die Kaliumverbindung ist vorzugsweise ein Kaliumsalz einer organischen Sulfonsäure, ein Kaliumsalz einer anorganischen Karbonsäure, ein Kaliumsalz eines Alkoxids, ein Kaliumphenoxid, oder ein Kaliumsalz eines organischen Partialesters der phosphorigen Säure.

Die ungleichmäßige Verteilung derStyrol-Mikroblöcke zeigt sich darin, dass die aus den Daten der dynamisch-mechanischen Analyse (DMA) des Reinpolymerisates ermittelte Temperatur des Maximalwertes für Tangens δ das zu steigenden Temperaturwerten erste Maximum des Verlustmoduls um mindestens 30 °C überschreitet. Reifen-Laufstreifenmischungen nach der Erfindung, bzw. daraus hergestellte Prüfkörper, zeigen einen breiten Tangens δ-Wert, der zu relativ hohen Temperaturen verschoben ist. Eine derartige Verschiebung bringt üblicherweise eine Verbesserung des Nassschleuderverhaltens bei Verschlechterung des Rollwiderstandes mit sich. Überraschenderweise wurde jedoch gefunden, dass sich der Rollwiderstand bei verbesserter Kälteflexibilität, verbessertem Eisbremsen und erhöhtem Nassgriff nicht verschlechtert. Der Abrieb bleibt im Wesentlichen unverändert.

Der Gesamt-Styrolgehalt des mikroblockhaltigen SBR-Copolymers beträgt vorzugsweise 25 bis 45 Mol-%.

Der Diolefinanteil, der vorzugsweise der Butadienanteil des SBRs ist, trägt den Gehalt an Vinylgruppen bei, die nach dem Copolymerisationsprozess noch zur Verfügung stehen. Der Vinylgehalt ist in bekannter Weise über die Polymerisationsbedingungen einstellbar.

Bei der Erfindung beträgt der Vinylgehalt des SBR-Butadiens vorzugsweise 5 bis 80 Mol-%.

Der Kautschukanteil kann neben dem mikroblockhaltigen Styrol-Diolefin- bzw. Styrol-Butadien-Kautschuk (SBR) folgende Kautschuke einzeln oder im Gemisch enthalten: Naturkautschuk (NR), Butadienkautschuk (BR), Polyisoprenkautschuk (IR), Polychloropren-kautschuk (CR) und es kann auch ein mengenmäßig untergeordneter Anteil eines weiteren, nicht-mikroblockhaltigen SBR-Kautschuks vorhanden sein.

Die Mischung kann weiterhin die für Reifen-Laufstreifengummi üblichen Additive enthalten.

Der in der Mischung vorgesehene Füllstoff kann einen Siliziumoxid-basierten Füllstoff (Silica, Kieselsäure) oder Ruß enthalten oder aus einem auf Siliziumoxid basierenden Füllstoff, vorzugsweise Silica und/oder Ruß, bestehen.

Vorzugsweise enthält der Füllstoff eine Mischung aus wenigstens einem Siliziumoxid-basierten Füllstoff und wenigstens einer Qualität an Ruß. Geeignete Silizium-basierte Füllstoffe und Ruße für Reifen-Laufstreifenmischungen sind im Stande der Technik bekannt und können hier verwendet werden.

Die Füllstoffe und Kautschuke der Mischung können ebenfalls modifiziert sein, wie dies aus dem Stand der Technik für Kautschukmischungen grundsätzlich bekannt ist.

Gemäß einem anderen Aspekt der Erfindung kann das SBR an mindestens einem der Kettenenden funktionalisiert werden. Die Funktionalisierung wird üblicherweise mittels eines funktionalisierten Starters und/oder Terminators eingebracht. Geeignete Verfahren und Gruppen sind aus dem Stand der Technik bekannt. Beispiele sind zum Beispiel in der EP 1 457 501 angegeben. Funktionalisierungen werden oft eingeführt, um die Kohäsion oder Bindungskraft zwischen Kautschuk und Füllstoff, d. h. Ruß oder Siliziumoxid-basierten Füllstoffen, zu verbessern. In dem gleichen Sinne können wahlweise bifunktionelle_Haftvermittler, insbesondere Silane und Amine, als Additive zu den Kautschukmischungen verwendet werden.

Eine große Vielzahl an funktionellen Gruppen ist bereits für die vorstehend erwähnten Ziele vorgeschlagen worden. Bei dieser Erfindung ist die Funktionalisierung vorzugsweise aus einer aus Aminogruppen bestehenden Gruppe ausgewählt, die and die Polymerkette mit oder ohne Spacer gebunden sind, z. B. die Gruppen H₂N-R¹-; R²HN-R¹- und R²₂N-R¹-, wobei R¹ einen Spacer, vorzugsweise eine Alkylkette, verzweigt oder nicht verzweigt mit C₀ bis C₁₂ (C₀ bedeutet ohne Spacer), und R² ein Alkyl ist, das aus der Gruppe Methyl, Ethyl, Propyl, Butyl, verzweigt oder nicht verzweigt, und weiterhin aus Silangruppen, vorzugsweise Alkoxysilangruppen, und aus Aminogruppen, die Alkoxysilangruppen enthalten, ausgewählt wird. Die Alkylgruppe des Alkoxysilans kann vorzugsweise R¹ oder R² sein.

Die Erfindung umfasst ebenfalls die Verwendung der erfindungsgemäßen Kautschukmischung für die Herstellung eines Laufstreifens für einen Fahrzeugreifen und umfasst ebenfalls den Laufstreifen und die damit hergestellten Fahrzeugreifen. Der Fahrzeugreifen ist in aller Regel ein Fahrzeugluftreifen.

Für die Gummiherstellung werden die erfindungsgemäßen unvulkanisierten Kautschukmischungen in bekannter Weise weiterverarbeitet, d. h. mit Hilfe von in der Mischung vorhandenen Vulkanisationsmitteln vulkanisiert. Der Begriff "Vulkanisation" soll hier allgemein die Vernetzung des im Wesentlichen linearen, nicht dreidimensionalen Kautschuks zu einem Kautschuk-Elastomer bezeichnen, unabhängig davon, ob in klassischer Form Schwefel, Schwefel freisetzende Reagenzien oder andere für Natur- und Synthesekautschuke geeignete Vernetzer verwendet werden, wie dem Fachmann bekannt ist. Zu diesem Zweck können passende Additive wie Verzögerer und Beschleuniger verwendet werden, die dem Fachmann ebenfalls geläufig sind. Neben Schwefel können für die Vernetzung u. a. Peroxide zur Anwendung kommen.

Im Folgenden wird die Erfindung anhand von Ausführungsbeispielen näher illustriert, die lediglich dem besseren Verständnis der Erfindung, nicht aber der Beschränkung der Erfindung dienen sollen.

### Beispiele

In den nachfolgenden Tabellen sind Mischungsbeispiele und Messdaten zu dynamisch-mechanischen Kennwerten dieser Mischungsbeispiele sowie Daten der zugehörigen Rohpolymere zusammengefasst. Die Mengenangaben für die Mischungen sind jeweils Gewichtsteile, die auf 100 Gewichtsteile Gesamtkautschuk bezogen sind (phr). Die Mischungen werden in üblicher Weise in einem Laborkneter hergestellt. Hieraus werden vulkanisierte Prüfkörper hergestellt. Teils an den Prüfkörpern, teils am Rohpolymer (wie angegeben) werden für die Kautschukindustrie typische Materialeigenschaften mit den im Folgenden angegebenen Testverfahren ermittelt.
- Shore-A-Härte bei RT und 70 °C gemäß DIN 53 505
- Rückprallelastizität (elastische Rückverformung) bei RT und 70 °C gemäß DIN 53 512
- Zugfestigkeit bei Raumtemperatur gemäß DIN 53 504
- Bruchdehnung bei Raumtemperatur gemäß DIN 53 504
- Spannungswerte bei 50, 100, 200 und 300 % Dehnung bei RT gemäß DIN 53 504
- Bruchenergiedichte bestimmt im Zugversuch nach DIN 53 504, wobei die Bruchenergiedichte die bis zum Bruch erforderliche Arbeit bezogen auf das Volumen der Probe ist,
- Messbedingungen für die Rohpolymer DMA: Mettler-Toledo DMA/SDTA 861, Scherprobenhalter: Temperaturscan von -70°C bis 30 °C bei 10 Hz; maximale Kraftamplitude: 0,12 N, maximale Wegamplitude 25 µm
- Tangens Delta nach DIN 53 513 aus Messung mit konstanter Verformungsamplitude von 0,2 % bei 10 % Vorverformung in Kompression mit 10 Hz dynamischer Verformungsfrequenz
- Verlustmodul G" des Rohpolymers oder E" des Compounds nach DIN 53 513.
- Abrieb bei RT gemäß DIN 53 516

### Beispiel 1 (Styrol-Monomer-Gradient entlang der Kette):

### Charakterisierung der SBR-Polymere für Beispiel 1:

**(Daten der Rohpolymere)**

| SBR-Polymer | Referenz 1 | Polymer 1 |
|---|---|---|
| Vinylanteil (Mol-%) | 47 | 43 |
| Styrolanteil basierend auf SBR (Mol-%) | 41 | 41 |
| Monomer-Verteilung | gleichmäßig | ungleichmäßig |

**Mischungsspezifikationen für Beispielmischung (Polymer 1):**

| Mischung 1 (mit Polymer 1) | Menge [phr] |
|---|---|
| Styrolbutadienkautschuk | 70 |
| Naturkautschuk (NR) | 30 |
| Silica | 45 |
| Öl | 32 |
| Ruß | 46 |
| TESPT 50 % auf Ruß | 8 |
| Alterungsverzögerer | 4 |
| Wachs für Ozonschutz | 2.5 |
| Zinkoxid | 2.5 |
| Stearinsäure | 1 |
| Fettsäureester und Zinkseifen | 4 |
| Beschleuniger | 2.9 |
| Schwefel | 1.8 |

Referenz 1: gleiche Spezifikationen, es wurde nicht mit einer Monomervariation gearbeitet, daher kein Gradient.
Vulkanisation: jeweils 20 Minuten bei 160°C

Messung des dynamisch-mechanischen Verhaltens (Prädiktoren) der vulkanisierten Mischungen zu Beispiel 1:

| | **Referenz 1** | **Polymer 1** |
|---|---|---|
| Shore-Härte A (RT) | 69,5 | 70,6 |
| Shore-Härte A 70°C | 64,2 | 65,2 |
| Rückprallelastizität RT (%) | 13 | 12,9 |
| Rückprallelastizität 70°C (%) | 37,4 | 37,4 |
| Zugtest (R1) RT: | | |
| Zugfestigkeit (MPa) | 15,3 | 15,1 |
| Bruchdehnung (%) | 339 | 317 |
| Spannungswerte: | | |
| Modul 50 (MPa) | 1,98 | 2,04 |
| Modul 100 (MPa) | 3,83 | 3,93 |
| Modul 200 (MPa) | 9,23 | 9,67 |
| Modul 300 (MPa) | 14,78 | - |
| Bruchenergiedichte (J/cm³) | 22,6 | 20,3 |
| tan Delta 10 °C | 0,59 | 0,61 |
| tan Delta 60 °C | 0,176 | 0,154 |
| Verlustmodul 10 °C (MPa) | 31,3 | 36,7 |
| Verlustmodul 60 °C (MPa) | 2,5 | 2,5 |

Die vermessenen in der Kautschukindustrie üblicherweise betrachteten Materialeigenschaften lassen sich als sogenannte Prädiktoren oder Kenngrößen für die Voraussage bestimmter Gebrauchseigenschaften der mit entsprechenden Laufstreifen ausgerüsteten Reifen verwenden. So zeigt beispielsweise ein möglichst niedriger Wert für die Rückprallelastizität bei Raumtemperatur einen guten Nassgriff und ein hoher Wert der Rückprallelastizität bei 70°C einen guten Rollwiderstand an.

### Beispiel 2 (Styrol-Mikroblock-Gradient entlang der Kette):

### Charakterisierung der SBR-Polymere für Beispiel 2:

SBR-Polymere mit Styrol-Mikroblöcken in gleichmäßiger Verteilung über die Kette (Referenz 2) und in ungleichmäßiger Verteilung über die Kette (Polymer 2)
Die Polymerisationsbedingungen und Spezifikationen für Referenz 2 und Polymer 2 sind gleich bis auf die Variation der Monomerkonzentration bei Polymer 2.

| SBR-Polymer | Referenz 2 | Polymer 2 |
|---|---|---|
| Vinylanteil (Mol-%) | 48 | 44 |
| Styrolanteil basierend auf SBR (Mol-%) | 40 | 41 |
| Styrol-Mikroblocks basierend auf Styrolanteil (%) | 39 | 43 |
| Verteilung der Styrol-Mikroblocks | gleichmäßig | Gradient |

**Mischungsspezifikationen für Beispielmischungen (Beispiel 2):**

| | Polymer 2 |
|---|---|
| Styrolbutadienkautschuk | 70 |
| Naturkautschuk (NR) | 30 |
| Silica | 45 |
| Öl | 32 |
| Ruß | 46 |
| TESPT 50 % auf Ruß | 8 |
| Alterungsverzögerer | 4 |
| Wachs für Ozonschutz | 2,5 |
| Zinkoxid | 2,5 |
| Stearinsäure | 1 |
| Fettsäureester und Zinkseifen | 4 |
| Beschleuniger | 2,9 |
| Schwefel | 1,8 |

Vulkanisationsbedingungen: jeweils 20 min bei 160 °C.

**Messung des dynamisch-mechanischen Verhaltens (Prädiktoren) - Beispiel 2:**

| | **Referenz 2** | **Polymer 2** |
|---|---|---|
| Shore-Härte A (RT) | 70 | 72,7 |
| Shore-Härte A 70°C | 65 | 64,7 |
| Rückprallelastizität RT (%) | 14,6 | 9,6 |
| Rückprallelastizität 70°C (%) | 39,4 | 36,9 |
| | | |
| Zugtest (R1) RT: | | |
| Zugfestigkeit (MPa) | 16,4 | 15,9 |
| Bruchdehnung (%) | 358 | 345 |
| Spannungswerte: | | |
| Modul 50 (MPa) | 1,86 | 2,03 |
| Modul 100 (MPa) | 3,59 | 3,82 |
| Modul 200 (MPa) | 9,17 | 9,49 |
| Modul 300 (MPa) | 15,02 | 15,11 |
| Bruchenergiedichte (J/cm³) | 25,1 | 24 |
| | | |
| tan Delta 10 °C | 0,458 | 0,472 |
| tan Delta 60 °C | 0,149 | 0,159 |
| | | |
| Verlustfaktor 10 °C (MPa) | 18,6 | 54,3 |
| Verlustfaktor 60 °C (MPa) | 2,4 | 2,6 |

**Rohpolymer DMA-Daten**

| | Kettencharakterisierung | tan δ Maximum | G" Maximum |
|---|---|---|---|
| Referenz 1 | keine Blöcke, kein Gradient | +6 | - 23 |
| Polymer 1 | keine Blöcke, Monomergradient | 10 | -77 |
| Referenz 2 | Mikroblöcke, kein Gradient | 4 | -21 |
| Polymer 2 | Mikroblöcke Gradient | 26 | -47 |

### Figuren

- Fig. 1: Tan Delta und Verlustmodul G" in Abhängigkeit von der Temperatur für Referenz 1 (Rohpolymer)
- Fig. 2: Tan Delta und Verlustmodul G" in Abhängigkeit von der Temperatur für Polymer 1 (Rohpolymer)
- Fig. 3: Tan Delta und Verlustmodul G" in Abhängigkeit von der Temperatur für Referenz 2 (Rohpolymer)
- Fig. 4: Tan Delta und Verlustmodul G" in Abhängigkeit von der Temperatur für Polymer 2 (Rohpolymer)

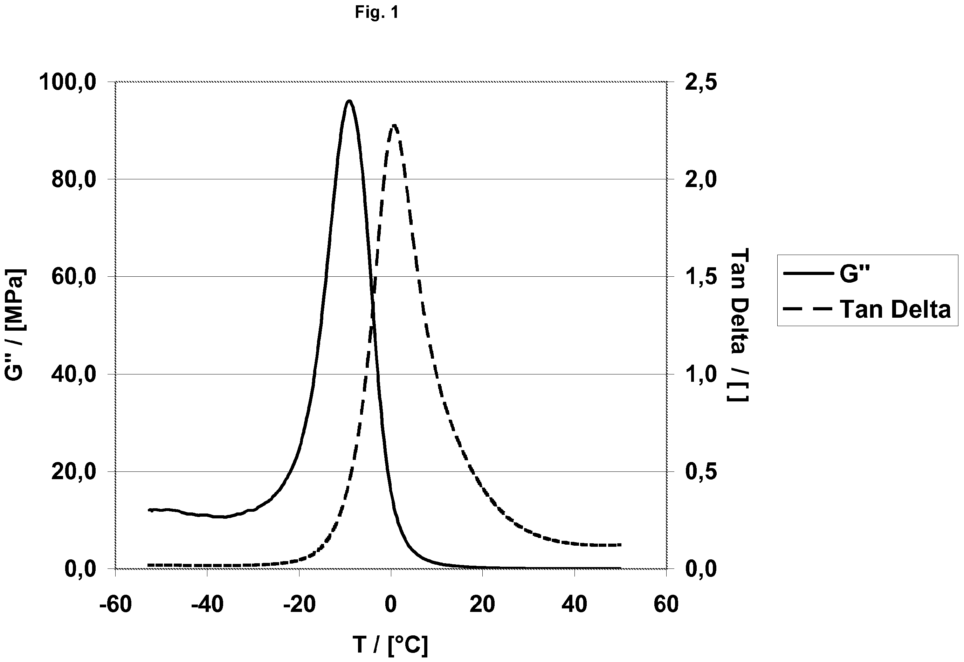

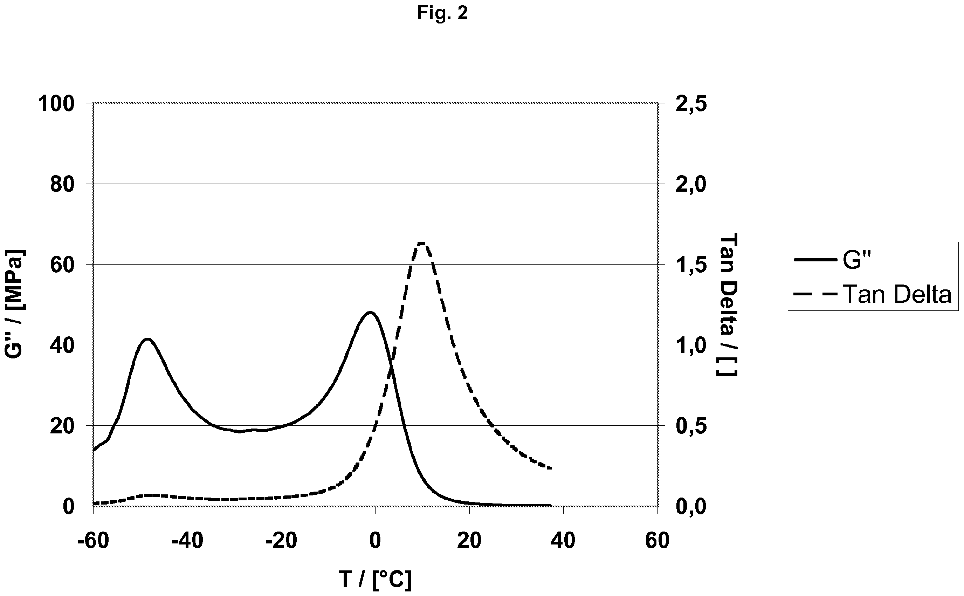

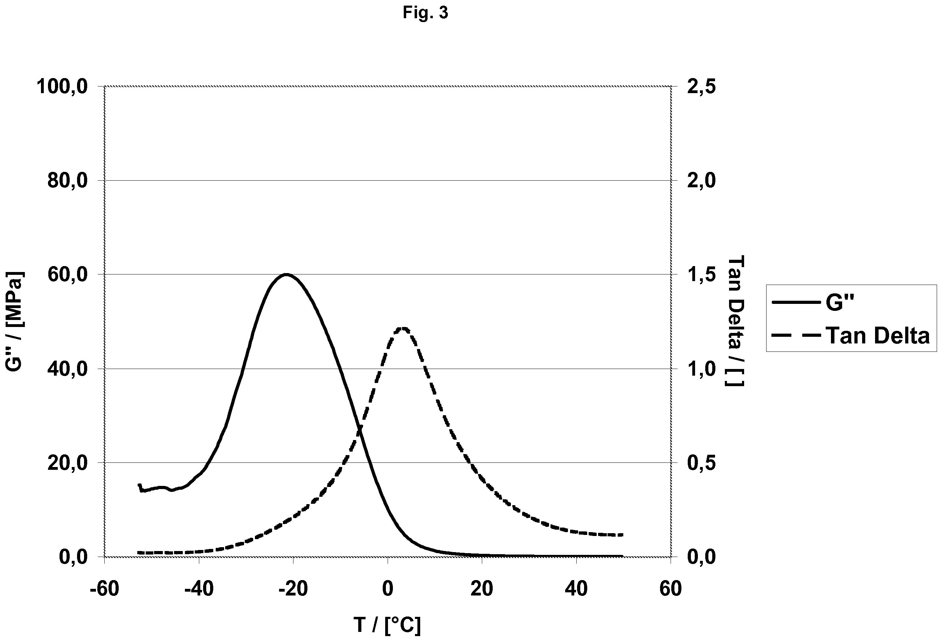

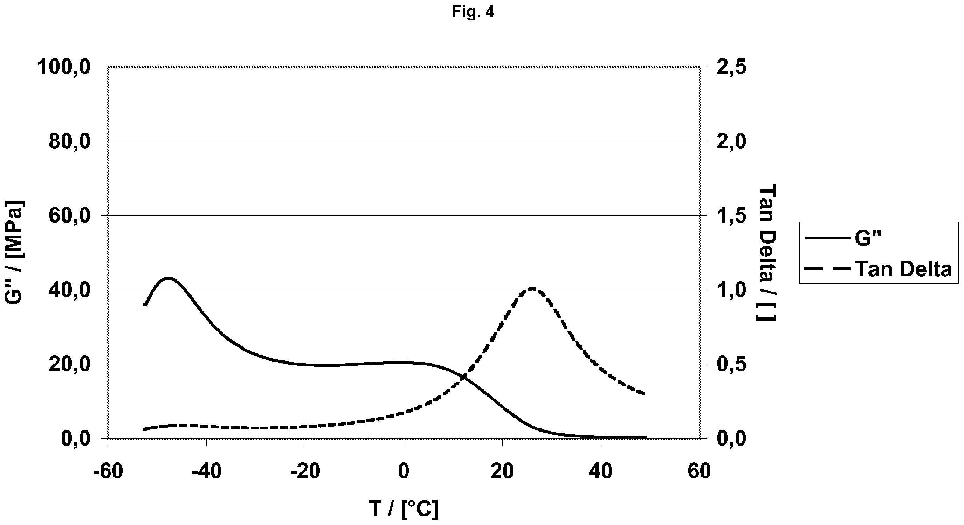

Die Abbildungen 1 bis 4 zeigen die Daten des in Scherung gemessenen Temperatursweeps der Rohpolymere. Die beiden erfindungsgemäßen Polymere (Fig. 2 und Fig. 4) zeichnen sich durch eine große Temperaturdifferenz der Peaks der Verlustmodul- und der Tan Delta Kurve aus. Für Polymer 1 beträgt sie 88 °C und für Polymer 2 beträgt sie 73 °C. Die beiden Referenzen haben eine Temperaturdifferenz zwischen dem Peak der Tan Delta und der Verlustmodulkurve von weniger als 30 °C. Die Ursache für den Tieftemperaturpeak der Polymere mit ungleichmäßiger Verteilung der Monomere liegt in dem Polymerabschnitt mit geringer Styroldichte, der einen sehr niedrigen Glasübergang im Verhältnis zum Gesamtpolymer besitzt.

### (Messverfahren Rohpolymer DMA:

Mettler-Toledo DMA/SDTA861, Scherprobenhalter: Temperaturscan von -70 °C bis 30 °C bei 10 Hz; maximale Kraftamplitude: 0,12 N, maximale Wegamplitude 25 µm)

## Patentansprüche

1. Vulkanisierbare Kautschukmischung mit mindestens einem Kautschukpolymer, einem oder mehreren Füllstoffen und gegebenenfalls Additiven, **dadurch gekennzeichnet, dass** der Kautschukanteil 1 bis 100 Gew.-% eines konjugierten Diolefin-Styrol-Copolymers (SBR) mit einem Styrolgehalt von 10 bis 60 Mol-% enthält, **dadurch gekennzeichnet, dass** die Verteilung der Styroleinheiten und der konjugierten Dien-Einheiten entlang der Kette einen durch Variation der Monomer-Konzentrationen von Diolefin und Styrol während der Polymerisationsreaktion erzeugten Gradienten aufweist, so dass der aus den Daten der dynamisch mechanischen Analyse (DMA), wie in der Beschreibung gemessen, des SBR-Reinpolymerisates ermittelte Maximalwert für tan δ (nach DIN 53513) das zu steigenden Temperaturwerten erste Maximum des Verlustmoduls (nach DIN 53 513) um mindestens 30°C überschreitet.

2. Kautschukmischung nach Anspruch 1, **dadurch gekennzeichnet, dass** 20 bis 50 % der Styrol-Einheiten in Styrol-Mikroblöcken aus 2 bis 10 zusammenhängenden Styroleinheiten vorliegen.

3. Kautschukmischung nach Anspruch 2, **dadurch gekennzeichnet, dass** die Styrol-Mikroblöcke aus 3 bis 6 Styroleinheiten bestehen.

4. Kautschukmischung nach einem der Ansprüche 1 bis 3, **dadurch gekennzeichnet, dass** der Anteil von Styrol-Polymerisationseinheiten 25 bis 45 mol% beträgt.

5. Kautschukmischung nach einem der Ansprüche 1 bis 4, **dadurch gekennzeichnet, dass** der Vinylgehalt des SBR-Butadiens 5 bis 80 % beträgt.

6. Kautschukmischung nach einem der Ansprüche 1 bis 5, **dadurch gekennzeichnet, dass** der Kautschukanteil neben dem mikroblockhaltigen Styrol-Butadien-Kautschuk folgende Kautschuke einzeln oder im Gemisch enthält: Naturkautschuk (NR), Butadien-Kautschuk (BR), (Poly)isoprenkautschuk (IR), (Poly)chloroprenkautschuk (CR) und/oder andere Styrol-Butadien-Kautschuke (SBR).

7. Kautschukgemisch nach einem der Ansprüche 1 bis 6, **dadurch gekennzeichnet, dass** der Füllstoff einen Siliziumoxid-basierten Füllstoff oder Ruß oder beides enthält oder hieraus besteht.

8. Kautschukgemisch nach einem der Ansprüche 1 bis 7, **dadurch gekennzeichnet, dass** das SBR an mindestens einem der Kettenenden funktionalisiert ist und die Funktionalisierung aus der Gruppe ausgewählt ist bestehend aus: Aminogruppen, die mit oder ohne Spacer an die Kette gebunden sind, Silangruppen, vorzugsweise Alkoxysilangruppen, und Aminogruppen-enthaltende Alkoxysilangruppen.

9. Kautschukgemisch nach Anspruch 8, **dadurch gekennzeichnet, dass** die Aminogruppen durch eine der folgenden Formeln wiedergegeben werden: H₂N-R¹-; R²HN-R¹- und R²₂N-R¹-, wobei R¹ ein Spacer ist, vorzugsweise eine Alkylkette, verzweigt oder unverzweigt mit C₀ bis C₁₂, und R² ein Alkyl ist, das aus der Gruppe Methyl, Ethyl, Propyl, Butyl, verzweigt oder nicht verzweigt, ausgewählt ist.

10. Verwendung einer Kautschukmischung nach einem der Ansprüche 1 bis 9 für die Herstellung eines Laufstreifens für einen Fahrzeugreifen.

11. Laufstreifen für einen Fahrzeugreifen, der unter Verwendung einer Kautschukmischung nach einem der Ansprüche 1 bis 9 hergestellt ist.

12. Fahrzeugreifen, insbesondere ein Fahrzeugluftreifen, mit einem Laufstreifen, der mit Hilfe eines Kautschukgemisches nach einem der Ansprüche 1 bis 9 hergestellt ist.

## Claims

1. Vulcanizable rubber mixture with at least one rubber polymer, one or more fillers and optionally additives, **characterized in that** the rubber fraction comprises from 1 to 100% by weight of a conjugated diolefin-styrene copolymer (SBR) with from 10 to 60 mol% styrene content, **characterized in that** the distribution of the styrene units and of the conjugated diene units along the chain exhibits a gradient produced by variation of the monomer concentrations of diolefin and styrene during the polymerization reaction, so that the maximal value for tan δ determined from the dynamic mechanical analysis (DMA) data, measured as in the description, for the pure SBR polymer (in accordance with DIN 53513) occurs at a temperature at least 30°C higher than that of the first maximum of the loss modulus in the direction of rising temperature values (in accordance with DIN 53 513).

2. Rubber mixture according to Claim 1, **characterized in that** from 20 to 50% of the styrene units are present in styrene microblocks made of from 2 to 10 cohering styrene units.

3. Rubber mixture according to Claim 2, **characterized in that** the styrene microblocks consist of from 3 to 6 styrene units.

4. Rubber mixture according to any of Claims 1 to 3, **characterized in that** the proportion of styrene polymerization units is from 25 to 45 mol%.

5. Rubber mixture according to any of Claims 1 to 4, **characterized in that** the vinyl content of the SBR butadiene is from 5 to 80%.

6. Rubber mixture according to any of Claims 1 to 5, **characterized in that** the rubber fraction comprises, alongside the microblock-containing styrenebutadiene rubber, the following rubbers, individually or in a mixture: natural rubber (NR), butadiene rubber (BR), (poly)isoprene rubber (IR), (poly)chloroprene rubber (CR) and/or other styrenebutadiene rubbers (SBR).

7. Rubber mixture according to any of Claims 1 to 6, **characterized in that** the filler comprises, or consists of, a silicon-oxide-based filler or carbon black or both.

8. Rubber mixture according to any of Claims 1 to 7, **characterized in that** the SBR has been functionalized at at least one of the chain ends and the functionalization is selected from the group consisting of: amino groups bonded to the chain by, or without, spacers and of silane groups, preferably alkoxysilane groups, and of alkoxysilane groups comprising amino groups.

9. Rubber mixture according to Claim 8, **characterized in that** the amino groups are represented by one of the following formulae: H₂N-R¹-; R²HN-R¹- and R²₂N-R¹-, where R¹ is a spacer, preferably an alkyl chain, branched or unbranched with C₀ to C₁₂, and R² is alkyl selected from the group of methyl, ethyl, propyl and butyl, branched or unbranched.

10. Use of a rubber mixture according to any of Claims 1 to 9 for the production of a tread for a tyre.

11. Tread for a tyre, produced with use of a rubber mixture according to any of Claims 1 to 9.

12. Tyre, in particular a pneumatic tyre, with a tread produced with the aid of a rubber mixture according to any of Claims 1 to 9.

## Revendications

1. Mélange vulcanisable pour caoutchouc présentant au moins un polymère de caoutchouc, une ou plusieurs charges et le cas échéant des additifs, **caractérisé en ce que** la proportion de caoutchouc contient 1 à 100% en poids d'un copolymère de dioléfine conjuguée-styrène (SBR) présentant une teneur en styrène de 10 à 60% en mole, **caractérisé en ce que** la distribution des unités de styrène et des unités de diène conjugué le long de la chaîne présente un gradient généré par la variation des concentrations en monomères de dioléfine et de styrène pendant la réaction de polymérisation, de manière telle que la valeur maximale pour tan δ (selon la norme DIN 53513), déterminée à partir des données de l'analyse mécanique dynamique (AMD), telle que mesurée comme dans la description, du polymère pur de SBR, dépasse d'au moins 30°C le premier maximum, vers les valeurs croissantes de température, du module de perte (selon la norme DIN 53513).

2. Mélange de caoutchouc selon la revendication 1, **caractérisé en ce que** 20 à 50% des unités de styrène se trouvent dans des microblocs de styrène constitués par 2 à 10 unités de styrène attachées.

3. Mélange de caoutchouc selon la revendication 2, **caractérisé en ce que** les microblocs de styrène sont constitués par 3 à 6 unités de styrène.

4. Mélange de caoutchouc selon l'une quelconque des revendications 1 à 3, **caractérisé en ce que** la proportion d'unités de polymérisation de styrène est de 25 à 45% en mole.

5. Mélange de caoutchouc selon l'une quelconque des revendications 1 à 4, **caractérisé en ce que** la teneur en vinyle du SBR-butadiène est de 5 à 80% en mole.

6. Mélange de caoutchouc selon l'une quelconque des revendications 1 à 5, **caractérisé en ce que** la proportion de caoutchouc contient, outre le caoutchouc de styrène-butadiène contenant des microblocs, les caoutchoucs suivants, seuls ou en mélange : le caoutchouc naturel (NR), le caoutchouc de butadiène (BR), le caoutchouc de (poly)isoprène (IR), le caoutchouc de (poly)chloroprène (CR) et/ou d'autres caoutchoucs de styrène-butadiène (SBR).

7. Mélange de caoutchouc selon l'une quelconque des revendications 1 à 6, **caractérisé en ce que** la charge contient une charge à base d'oxyde de silicium ou de la suie ou les deux ou est constituée par celle(s)-ci.

8. Mélange de caoutchouc selon l'une quelconque des revendications 1 à 7, **caractérisé en ce que** le SBR est fonctionnalisé en au moins une des extrémités de chaîne et la fonctionnalisation est choisie dans le groupe constitué par : les groupes amino, qui sont liés avec ou sans écarteur à la chaîne, les groupes silane, de préférence les groupes alcoxysilane et les groupes alcoxysilane contenant des groupes amino.

9. Mélange de caoutchouc selon la revendication 8, **caractérisé en ce que** les groupes amino sont représentés par une des formules suivante : H₂N-R¹- ; R²HN-R¹- et R²₂N-R¹-, R¹ étant un écarteur, de préférence une chaîne alkyle, ramifiée ou non ramifiée en C₀ à C₁₂, et R² représente alkyle, qui est choisi dans le groupe formé par méthyle, éthyle, propyle, butyle, ramifiés ou non ramifiés.

10. Utilisation d'un mélange de caoutchouc selon l'une quelconque des revendications 1 à 9 pour la fabrication d'une bande de roulement pour un bandage pneumatique pour véhicules.

11. Bande de roulement pour un bandage pneumatique pour véhicules qui est fabriqué en utilisant un mélange de caoutchouc selon l'une quelconque des revendications 1 à 9.

12. Bandage pneumatique pour véhicules, en particulier pneu pour véhicules, présentant une bande de roulement, qui est fabriquée à l'aide d'un mélange de caoutchouc selon l'une quelconque des revendications 1 à 9.
